# FASCICULE DE BREVET EUROPEEN

(11) **EP 0 984 193 B1**
(45) Date de publication et mention de la délivrance du brevet: **11.06.2003**
(21) Numéro de dépôt: 99402136.8
(22) Date de dépôt: 27.08.1999
(51) Int. Cl.: F16F 13/26

(54) **Support antivibratoire hydraulique actif à commande pneumatique**
Aktives Hydrolager mit pneumaticher Steuerung
Hydraulic engine mount with pneumatic control

(30) Priorité: 31.08.1998 FR 9810869
(43) Date de publication de la demande: 08.03.2000
(73) Titulaire: HUTCHINSON, 75008 Paris (FR)
(72) Inventeur: Gennesseaux, André, 28200 Conie Molitard (FR); Gastineau, Jean-Luc, 41160 St. Jean Froidmentel (FR); Durand, Sylvain, 45190 Villorceau (FR)
(74) Mandataire: Burbaud, Eric

(56) Documents cités:
- EP-A- 0 262 544
- DE-A- 3 801 108
- US-A- 4 638 983
- US-A- 4 693 455
- US-A- 5 209 462
- US-A- 5 215 293
- PATENT ABSTRACTS OF JAPAN vol. 098, no. 004, 31 mars 1998 (1998-03-31) & JP 09 317815 A (TOYODA GOSEI CO LTD), 12 décembre 1997 (1997-12-12)

## Description

La présente invention est relative aux supports antivibratoires hydrauliques à commande pneumatique, destinés notamment à supporter des moteurs de véhicules automobiles.

On connaît divers supports antivibratoires hydrauliques à commande pneumatique, qui sont soit des supports pilotables (c'est-à-dire de raideur variable) tels que celui divulgué dans le document EP-A-0 262 544, soit des supports actifs (c'est-à-dire produisant des contre-vibrations visant à annuler les effets des vibrations du moteur) tels que celui ne divulgué dans le document JP-A-9 317 815.

Parmi ces supports connus, l'invention concerne plus particulièrement un support antivibratoire hydraulique actif à commande pneumatique destiné à être interposé entre deux éléments rigides et comportant :
- des première et deuxième armatures rigides destinées à être solidarisées respectivement avec les deux éléments rigides à réunir,
- un corps en élastomère qui relie entre elles les deux armatures et qui délimite partiellement une chambre de travail remplie de liquide,
- une paroi souple délimitant partiellement une chambre de compensation remplie de liquide, laquelle est reliée à la chambre de travail par un passage étranglé également rempli de liquide,
- une cloison rigide qui est solidaire de la deuxième armature et qui délimite partiellement la chambre de travail, cette cloison rigide comportant un ajutage obturé par une membrane flexible, cette membrane présentant une première face communiquant avec la chambre de travail et une deuxième face isolée de ladite chambre de travail,
- une chambre pneumatique partiellement délimitée par la deuxième face de la membrane.

Un tel support antivibratoire équipe notamment le véhicule HARRIER commercialisé par la société TOYOTA. Dans ce support connu, des contre-vibrations sont émises dans la chambre de travail aux fréquences de ralenti du moteur, en actionnant l'électrovanne de façon à relier alternativement la chambre pneumatique avec l'atmosphère et avec la source pneumatique (en pratique, une source de dépression constituée par le circuit d'admission d'air du moteur).

Ce support antivibratoire connu présente l'inconvénient d'être relativement complexe et coûteux.

La présente invention a notamment pour but de pallier cet inconvénient.

A cet effet, selon l'invention, un support antivibratoire hydraulique du genre en question est essentiellement caractérisé en ce qu'il comporte au moins une électrovanne pour faire communiquer la chambre pneumatique avec l'atmosphère et/ou avec un raccord destiné à être connecté à une source pneumatique, ladite électrovanne étant reliée à un connecteur électrique lui-même destiné à être relié à un système électronique de commande, et un ensemble d'actionnement pneumatique monobloc qui inclut :
- un bloc de support rigide solidaire de la deuxième armature,
- l'électrovanne,
- le raccord pneumatique,
- et le connecteur électrique,
le bloc de support comportant un rebord annulaire qui délimite partiellement la chambre pneumatique, et ce bloc de support étant appliqué contre la cloison rigide en serrant la membrane flexible entre ledit rebord annulaire et ladite cloison rigide, ce rebord annulaire étant disposé autour de l'ajutage de la cloison rigide.

Grâce à ces dispositions, les éléments électriques et pneumatiques du support antivibratoire sont intégrés dans l'ensemble pneumatique monobloc, ce qui contribue à faciliter le montage de ces éléments dans le support antivibratoire et à diminuer le coût et la complexité de ce support.

De plus, la complexité du support antivibratoire est encore diminuée par le fait que c'est la fixation même de l'ensemble pneumatique monobloc qui permet d'obtenir :
- le contact étanche entre la membrane flexible et la cloison de la chambre de travail,
- et/ou la fermeture étanche de la chambre pneumatique.

Par ailleurs, le support antivibratoire forme lui-même un ensemble monobloc qui est peu encombrant et facile à monter dans le véhicule, puisqu'il suffit de l'installer comme un support antivibratoire classique et de brancher le raccord pneumatique et le connecteur électrique.

Enfin, du fait de la compacité de l'ensemble d'actionnement pneumatique, les conduits pneumatiques sont plus courts que dans le support TOYOTA, ce qui peut permettre le cas échéant de commander le support antivibratoire à des fréquences plus élevées que les fréquences de ralenti, de façon à émettre également des contre-vibrations pendant le roulage du véhicule.

Dans des modes de réalisation préférés de l'invention, on peut éventuellement avoir recours en outre à l'une et/ou à l'autre des dispositions suivantes :
- le corps en élastomère présente une forme en cloche, s'étendant entre d'une part, un sommet solidaire de la première armature, et d'autre part, une base annulaire solidaire de la deuxième armature, l'ensemble d'actionnement pneumatique étant contenu dans un boîtier rigide qui est disposé à l'opposé du corps en élastomère par rapport à la cloison rigide, ce boîtier étant solidarisé avec la deuxième armature et avec ladite cloison rigide en appliquant la base du corps en élastomère sur la cloison rigide, et le bloc de support de l'ensemble d'actionnement pneumatique étant serré entre le boîtier et la cloison rigide, de façon à appliquer le rebord annulaire dudit bloc de support contre la membrane flexible et la cloison rigide ;
- la chambre de compensation est également disposée à l'intérieur du boîtier ;
- la membrane est constituée par une partie centrale appartenant à la paroi souple de la chambre de compensation, ladite chambre de compensation présentant une forme annulaire et étant disposée autour de l'ensemble d'actionnement pneumatique ;
- la paroi souple de la chambre de compensation comporte une armature métallique périphérique de renfort qui est sertie sur la cloison rigide et sur la deuxième armature en pressant ladite deuxième armature et la base du corps en élastomère contre la cloison rigide ;
- le boîtier est métallique et est serti par-dessus l'armature périphérique de renfort de la paroi souple ;
- la paroi souple de la chambre de compensation comporte, autour de sa partie centrale formant la membrane flexible, une armature centrale rigide qui est noyée dans ladite paroi souple et qui présente :
   . une face annulaire d'appui qui est parallèle à la cloison rigide et qui est serrée entre ladite cloison rigide et le rebord annulaire du bloc de support de l'ensemble d'actionnement pneumatique,
   . et un rebord annulaire qui s'étend perpendiculairement à la cloison rigide autour dudit rebord annulaire du bloc de support ;
- la deuxième armature forme une couronne creuse ouverte vers la cloison rigide, délimitant le passage étranglé avec ladite cloison rigide ;
- le bloc de support de l'ensemble d'actionnement pneumatique comporte en outre un réservoir tampon interposé entre le raccord pneumatique et la chambre pneumatique ;
- l'ajutage est dimensionné pour présenter une fréquence propre de résonance comprise entre 20 et 80 Hz ;
- l'ensemble d'actionnement pneumatique monobloc comporte un passage d'air qui relie l'électrovanne à la chambre pneumatique et qui est dimensionné pour présenter une fréquence propre de résonance comprise entre 20 et 80 Hz.

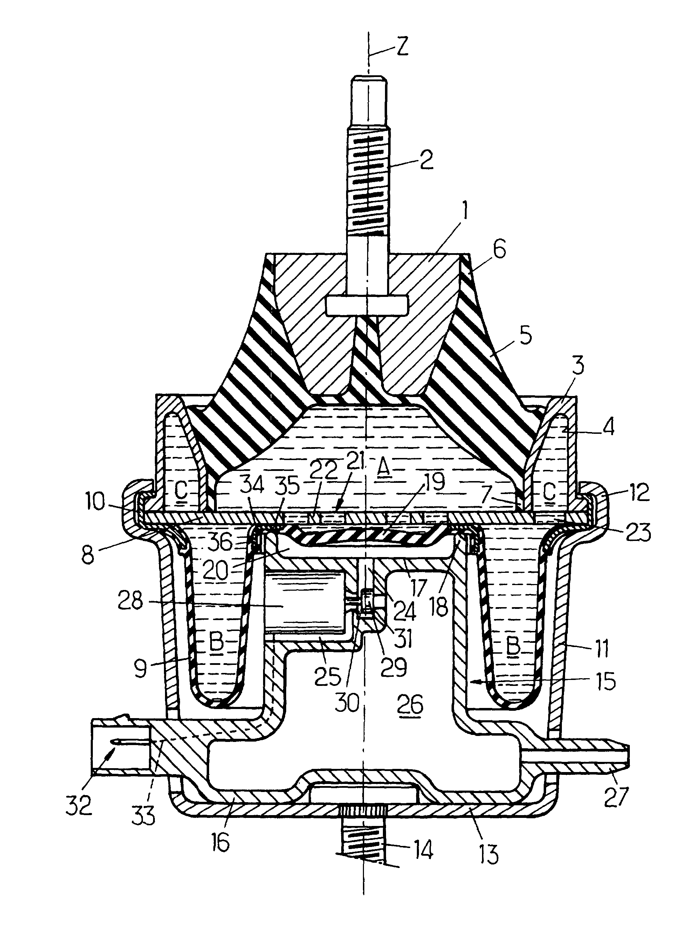

D'autres caractéristiques et avantages de l'invention apparaîtront au cours de la description suivante d'une de ses formes de réalisation, donnée à titre d'exemple non limitatif, en regard du dessin joint.

Sur le dessin, la figure unique est une vue en coupe axiale d'un support antivibratoire selon une forme de réalisation de l'invention.

Dans la description qui suit, les termes tels que "haut", "bas", "inférieur", "supérieur", "horizontal", "vertical" sont utilisés dans le seul but d'améliorer la clarté de la description, en se référant à la position d'utilisation la plus habituelle du dispositif selon l'invention, mais ces termes ne sont pas limitatifs.

Le dispositif antivibratoire hydraulique représenté sur la figure comporte :
- une première armature 1 présentant la forme d'une embase métallique rigide solidaire d'un goujon 2 qui est dirigé vers le haut selon un axe vertical Z et qui est destiné à être fixé par exemple au bloc motopropulseur d'un véhicule,
- une deuxième armature 3 formée par une couronne métallique rigide centrée sur l'axe Z, cette couronne étant creuse et délimitant intérieurement une gorge 4 qui est ouverte vers le bas et qui s'étend angulairement sur une partie de la circonférence de la couronne 3,
- un corps en élastomère 5 présentant une relativement grande résistance à la compression, ce corps en élastomère ayant une forme de cloche qui s'étend entre un sommet 6 solidaire de l'embase 1 et une base annulaire 7 qui est solidaire de la couronne 3,
- une cloison rigide 8 qui se présente sous la forme d'une plaque de tôle horizontale plane et qui est appliquée de façon étanche contre la base 7 du corps en élastomère et contre la couronne métallique 3,
- une paroi souple 9 en élastomère dont la périphérie extérieure est renforcée par une armature métallique 10 sertie sur la couronne 3 et la cloison rigide 8, de façon à serrer ces deux pièces l'une contre l'autre avec étanchéité,
- un boîtier en tôle 11 dont le bord 12 est serti sur l'armature périphérique de renfort 10 de façon à solidariser ainsi le boîtier 11 avec la couronne 3 et la cloison rigide 8, le boîtier 11 comportant un fond 13 solidarisé avec un goujon 14 destiné à être fixé par exemple au châssis du véhicule,
- et un ensemble d'actionnement pneumatique 15 monobloc qui est disposé dans le boîtier 11.

L'ensemble d'actionnement pneumatique 15 comporte un bloc de support 16 rigide qui présente à sa partie supérieure une cuvette 17 délimitée par un rebord annulaire 18 dudit bloc.

Ce rebord annulaire 18 soulève la partie centrale de la paroi souple en élastomère 9, en serrant la périphérie de cette partie centrale contre la face inférieure de la cloison rigide 8, l'ensemble du bloc de support 16 étant lui-même serré entre ladite partie centrale de la paroi souple 9 et le fond 13 du boîtier 11.

Ainsi, la partie centrale de la paroi souple en élastomère forme une membrane flexible 19 qui délimite vers le bas, avec la cuvette 17, une chambre pneumatique 20.

Avantageusement, la paroi souple en élastomère 9 est renforcée par une armature centrale annulaire 34 rigide qui est noyée dans ladite paroi souple et qui comporte :
- une face annulaire d'appui 35 qui est parallèle à la cloison rigide 8 et qui est serrée entre ladite cloison rigide et le rebord annulaire 18,
- et un rebord annulaire 36 qui s'étend perpendiculairement à la cloison rigide autour du rebord annulaire 18 du bloc de support 16, ce qui permet d'assurer un bon centrage de la paroi souple 9.

De plus, la cloison rigide 8 présente un ajutage central 21 en correspondance avec la membrane flexible 19, au centre du rebord annulaire 18. Cet ajutage 21, qui est pourvu d'une grille 22 limitant les débattements de la membrane, met en contact la face supérieure de ladite membrane 19 avec une chambre de travail A remplie de liquide, délimitée entre le corps en élastomère 5 et la cloison rigide 8.

Cette chambre de travail communique, par l'intermédiaire d'une ouverture radiale (non représentée) ménagée dans la couronne 3, avec un passage étranglé C rempli de liquide et délimité entre la gorge 4 de la couronne 3 et la cloison rigide 8.

Le passage étranglé C communique, par l'intermédiaire d'un orifice 23, avec une chambre de compensation annulaire B remplie de liquide, qui est délimitée entre la cloison rigide 8 et la partie radialement extérieure de la paroi souple en élastomère 9, cette chambre de compensation étant disposée autour de la partie supérieure du bloc de support 16.

Par ailleurs, la chambre pneumatique 20 communique avec un puits central 24 percé dans le bloc de support 16, lequel puits central communique, d'une part, avec un passage 25 de mise à l'atmosphère, et d'autre part, avec un réservoir tampon 26. Ce réservoir communique lui-même avec un raccord pneumatique 27 sur lequel on peut brancher un tuyau flexible relié au circuit d'admission d'air du moteur ou à une autre source pneumatique (source de dépression ou même éventuellement réserve de gaz sous pression).

Le réservoir tampon 26 permet de filtrer les fluctuations de pression du circuit d'admission d'air.

La communication entre, d'une part, la chambre de pneumatique 20, et d'autre part, le passage de mise à l'atmosphère 25 et le réservoir 26, est commandée au moyen d'un électrovanne 28.

En l'absence d'actionnement de l'électrovanne, le clapet 29 de cette électrovanne est appliqué contre un premier siège de clapet 30, auquel cas la chambre pneumatique 20 est isolée de l'atmosphère et mise en dépression.

Au contraire, lors de l'actionnement de l'électrovanne 28, le clapet 29 est appliqué contre un deuxième siège de clapet 31 (position représentée sur la figure) en mettant la chambre pneumatique 20 à l'atmosphère et en l'isolant du réservoir 26 (non représenté).

L'électrovanne 28 est reliée à un connecteur électrique 32 par l'intermédiaire d'un ou plusieurs câbles 33, ce qui permet de faire commander l'électrovanne 28 par le calculateur de contrôle moteur du véhicule.

Le dispositif qui vient d'être décrit fonctionne comme suit.

Pendant que le véhicule est en train de rouler, le calculateur de contrôle moteur laisse l'électrovanne 28 en position de repos, de sorte que la chambre pneumatique 20 est maintenue en dépression. La membrane flexible 19 est donc plaquée sur le fond de la cuvette 17, et n'intervient pas dans le fonctionnement du support antivibratoire.

Dans cette configuration, le support antivibratoire fonctionne donc classiquement en amortissant les mouvements vibratoires de basse fréquence (par exemple inférieure à 20 Hz et généralement de l'ordre de 10 Hz) entre le bloc motopropulseur et le châssis du véhicule, grâce aux transferts de liquide qui ont lieu entre la chambre de travail A et la chambre de compensation B au travers du passage étranglé C.

Par ailleurs, lorsque le moteur fonctionne au ralenti, le calculateur de contrôle moteur commande l'électrovanne 28 en déplaçant alternativement le clapet 29 entre les premier et deuxième sièges de clapet 30 et 31, à la fréquence des explosions du moteur (généralement de 20 à 40 Hz pour un moteur à quatre cylindres et jusqu'à 80 hz pour un moteur à huit cylindres).

Il en résulte des fluctuations de pression dans la chambre pneumatique 20, de sorte que la membrane flexible 19 est animée de mouvements vibratoires qui émettent vers la chambre de travail A des contre-vibrations visant à neutraliser les effets des vibrations du moteur.

Les contre-vibrations émises par la membrane flexible 19 sont optimisées par le calculateur selon un programme prédéterminé en fonction du régime du moteur et de divers paramètres pouvant influer sur les vibrations de ralenti (fonctionnement de la climatisation, consommation d'électricité, température du moteur, etc.), en agissant sur les paramètres suivants :
- l'amplitude des vibrations de la membrane 19, qui est contrôlée en agissant sur le rapport cyclique du signal envoyé à l'électrovanne (rapport entre le temps de commande effectif de l'électrovanne 28 et la durée totale d'une période de vibration),
- la phase des vibrations de la membrane 19, contrôlée en agissant sur l'instant initial de chaque cycle d'actionnement de l'électrovanne 28 par rapport à la rotation du moteur, repérée par le passage d'un cylindre donné à son point mort haut.

Bien entendu, l'invention n'est pas limitée à la forme de réalisation qui vient d'être décrite, et elle en embrasse notamment les variantes dans lesquelles :
- l'électrovanne 28 mettrait la chambre pneumatique 20 en contact avec l'atmosphère lorsque ladite électrovanne est en position de repos,
- l'électrovanne 28 fonctionnerait non plus selon un mode binaire, mais selon un fonctionnement proportionnel permettant de piloter la position exacte du clapet 29 entre les deux sièges de clapet 30,31, ce qui permet de contrôler plus finement la pression dans la chambre pneumatique 20,
- le raccord pneumatique 27 constituerait également le connecteur électrique de commande de l'électrovanne 28, de façon à ne faire qu'un seul branchement lors de l'installation du support antivibratoire,
- la chambre de compensation B serait disposée sur la face "supérieure" de la cloison 8, selon une disposition similaire à celle divulguée dans le document EP-A-0 646 735,
- et l'électrovanne 28 serait actionnée pour faire émettre des contre-vibrations par la membrane 19 pendant le roulage du véhicule, c'est-à-dire à des fréquences supérieures à la fréquence de ralenti.

Eventuellement, afin d'augmenter l'efficacité de la membrane 19 pour atténuer les vibrations du moteur, il est possible de modifier la forme de l'ajutage 21 pour en diminuer la section de passage et pour en augmenter la longueur, de façon que cet ajutage soit le siège de phénomènes de résonance analogues à ceux qui se produisent dans le passage étranglé C, mais à une fréquence plus élevée correspondant de préférence à la fréquence de ralenti du moteur. Dans ce cas, la fréquence propre de l'ajutage 21 est comprise de préférence entre 20 et 80 Hz.

Dans le même but, il est également possible de dimensionner le puits central 24, ou un passage d'air de forme différente (plus grande longueur et plus faible section de passage) entre le clapet 29 de l'électrovanne et la chambre pneumatique 20, pour que ce puits central 24 ou ce passage d'air soit le siège de phénomènes de résonance à la fréquence de ralenti du moteur, la fréquence propre dudit puits 24 ou dudit passage d'air étant alors comprise de préférence entre 20 et 80 Hz.

## Revendications

1. Support antivibratoire hydraulique actif à commande pneumatique destiné à être interposé entre deux éléments rigides et comportant
- des première et deuxième armatures rigides (1, 3) destinées à être solidarisées respectivement avec les deux éléments rigides à réunir,
- un corps en élastomère (5) qui relie entre elles les deux armatures et qui délimite partiellement une chambre de travail (A) remplie de liquide,
- une paroi souple (9) délimitant partiellement une chambre de compensation (B) remplie de liquide, laquelle est reliée à la chambre de travail (A) par un passage étranglé (C) également rempli de liquide,
- une cloison rigide (8) qui est solidaire de la deuxième armature (3) et qui délimite partiellement la chambre de travail (A), cette cloison rigide comportant un ajutage (21) obturé par une membrane flexible (19), cette membrane présentant une première face communiquant avec la chambre de travail (A) et une deuxième face isolée de ladite chambre de travail,
- une chambre pneumatique (20) partiellement délimitée par la deuxième face de la membrane (19),
**caractérisé en ce qu'**il comporte au moins une électrovanne (28) pour faire communiquer la chambre pneumatique (20) avec l'atmosphère et/ou avec un raccord (27) destiné à être connecté à une source pneumatique, ladite électrovanne étant reliée à un connecteur électrique (32) lui-même destiné à être relié à un système électronique de commande, et un ensemble d'actionnement pneumatique monobloc (15) qui inclut :
- un bloc de support rigide (16) solidaire de la deuxième armature(3),
- l'électrovanne (28),
- le raccord pneumatique (27),
- et le connecteur électrique (32),
le bloc de support (16) comportant un rebord annulaire (18) qui délimite partiellement la chambre pneumatique (20), et ce bloc de support étant appliqué contre la cloison rigide (8) en serrant la membrane flexible (19) entre ledit rebord annulaire et ladite cloison rigide, ce rebord annulaire étant disposé autour de l'ajutage (21) de la cloison rigide.

2. Support antivibratoire selon la revendication 1, dans lequel le corps en élastomère (5) présente une forme en cloche, s'étendant entre d'une part, un sommet (6) solidaire de la première armature (2), et d'autre part, une base annulaire (7) solidaire de la deuxième armature (3), l'ensemble d'actionnement pneumatique (15) étant contenu dans un boîtier (11) rigide qui est disposé à l'opposé du corps en élastomère (5) par rapport à la cloison rigide (8), ce boîtier étant solidarisé avec la deuxième armature (3) et avec ladite cloison rigide en appliquant la base (7) du corps en élastomère sur la cloison rigide, et le bloc de support (16) de l'ensemble d'actionnement pneumatique étant serré entre le boîtier (11) et la cloison rigide (8), de façon à appliquer le rebord annulaire (18) dudit bloc de support contre la membrane flexible (19) et la cloison rigide (8).

3. Support antivibratoire selon la revendication 2, dans lequel la chambre de compensation (B) est également disposée à l'intérieur du boîtier (11).

4. Support antivibratoire selon la revendication 3, dans lequel la membrane (19) est constituée par une partie centrale appartenant à la paroi souple (9) de la chambre de compensation, ladite chambre de compensation (B) présentant une forme annulaire et étant disposée autour de l'ensemble d'actionnement pneumatique (15).

5. Support antivibratoire selon la revendication 4, dans lequel la paroi souple (9) de la chambre de compensation comporte une armature métallique périphérique de renfort (10) qui est sertie sur la cloison rigide (8) et sur la deuxième armature (3) en pressant ladite deuxième armature et la base (7) du corps en élastomère contre la cloison rigide.

6. Support antivibratoire selon la revendication 5, dans lequel le boîtier (11) est métallique et est serti par-dessus l'armature périphérique de renfort (10) de la paroi souple.

7. Support antivibratoire selon l'une quelconque des revendications 4 à 6, dans lequel la paroi souple (19) de la chambre de compensation comporte, autour de sa partie centrale formant la membrane flexible (19), une armature centrale (34) rigide qui est noyée dans ladite paroi souple et qui présente :
- une face annulaire d'appui (35) qui est parallèle à la cloison rigide (8) et qui est serrée entre ladite cloison rigide et le rebord annulaire (18) du bloc de support de l'ensemble d'actionnement pneumatique,
- et un rebord annulaire (36) qui s'étend perpendiculairement à la cloison rigide (8) autour dudit rebord annulaire du bloc de support.

8. Support antivibratoire selon l'une quelconque des revendications 2 à 7, dans lequel la deuxième armature (3) forme une couronne creuse ouverte vers la cloison rigide (8), délimitant le passage étranglé avec ladite cloison rigide.

9. Support antivibratoire selon l'une quelconque des revendications précédentes, dans lequel le bloc de support (16) de l'ensemble d'actionnement pneumatique comporte en outre un réservoir tampon (26) interposé entre le raccord pneumatique (27) et la chambre pneumatique (20).

10. Support antivibratoire selon l'une quelconque des revendications précédentes, dans lequel l'ajutage (21) est dimensionné pour présenter une fréquence propre de résonance comprise entre 20 et 80 Hz.

11. Support antivibratoire selon l'une quelconque des revendications précédentes, dans lequel l'ensemble d'actionnement pneumatique monobloc (15) comporte un passage d'air (24) qui relie l'électrovanne (28) à la chambre pneumatique (20) et qui est dimensionné pour présenter une fréquence propre de résonance comprise entre 20 et 80 Hz.

## Claims

1. A pneumatically controlled, active hydraulic anti-vibration support, designed to be inserted between two rigid elements and comprising:
- first and second rigid frames (1, 3) designed to be joined respectively to the two rigid elements to be connected,
- an elastomer body (5) linking the two frames to one another and partially delimiting a working chamber (A) filled with liquid,
- a flexible wall (9), partially delimiting a compensating chamber (B) filled with liquid, which is in turn connected to the working chamber (A) by a throttled passage (C), also filled with liquid,
- a rigid partition (8) which is joined to the second frame (3) and which partially delimits the working chamber (A), this rigid partition having a mouthpiece (21) closed off by means of a flexible membrane (19), this membrane having a first face communicating with the working chamber (A) and a second face isolated from said working chamber,
- a pneumatic chamber (20) partially delimited by the second face of the membrane (19),
**characterized in that** it has at least one solenoid (28) to provide communication between the pneumatic chamber (20) and the atmosphere and/or with a coupling (27) providing a connection to a pneumatic source, said solenoid being connected to an electrical connector (32) in turn designed to be connected to an electronic control system, and a single-block, pneumatic actuating unit (15) which incorporates:
- a rigid support block (16) joined to the second frame (3),
- the solenoid (28),
- the pneumatic coupling (27),
- and the electrical connector (32),
the support block (16) having an annular flange (18) which partially delimits the pneumatic chamber (20) and this support block being applied against the rigid partition (8) clamping the flexible membrane (19) between said annular flange and said rigid partition, this annular flange being disposed around the mouthpiece (21) of the rigid partition.

2. An anti-vibration support as claimed in claim 1, wherein the elastomer body (5) is of a bell shape extending between a top (6) integral with the first frame (2) on the one hand and an annular base (7) integral with the second frame (3) on the other, the pneumatic actuating unit (15) being contained in a rigid casing (11) which is arranged opposing the elastomer body (5) relative to the rigid partition (8), this casing being permanently joined to the second frame (3) and to said rigid partition by applying the base (7) of the elastomer body to the rigid partition, whilst the support block (16) of the pneumatic actuating unit is retained between the casing (11) and the rigid partition (8) so that the annular flange (18) of said support block is applied against the flexible membrane (19) and the rigid partition (8).

3. An anti-vibration support as claimed in claim 2, wherein the compensating chamber (B) is also disposed inside the casing (11).

4. An anti-vibration support as claimed in claim 3, wherein the membrane (19) is formed by a central part belonging to the flexible wall (9) of the compensating chamber, said compensating chamber (B) being annular in shape and being disposed around the pneumatic actuating unit (15).

5. An anti-vibration support as claimed in claim 4, wherein the flexible wall (9) of the compensating chamber has a peripheral metal reinforcing frame (10) which is crimped onto the rigid partition (8) and onto the second frame (3), pressing said second frame and the base (7) of the elastomer body against the rigid partition.

6. An anti-vibration support as claimed in claim 5, wherein the casing (11) is metal and is crimped on top of the peripheral reinforcing frame (10) of the flexible wall.

7. An anti-vibration support as claimed in any one of claims 4 to 6, wherein the flexible wall (19) of the compensating chamber has, around its central part forming the flexible membrane (19) a rigid central frame (34) which is embedded in said flexible wall and which has:
- an annular bearing face (35) which is parallel with the rigid partition (8) and which is clamped between said rigid partition and the annular flange (18) of the support block of the pneumatic actuating unit,
- and an annular flange (36) extending perpendicularly to the rigid partition (8) around said annular flange of the support block.

8. An anti-vibration support as claimed in any one of claims 2 to 7, wherein the second frame (3) forms a hollow crown open towards the rigid partition (8), delimiting the throttled passage in conjunction with said rigid partition.

9. An anti-vibration support as claimed in any one of the preceding claims, wherein the support block (16) of the pneumatic actuating unit also has a buffer reservoir (26) inserted between the pneumatic coupling (27) and the pneumatic chamber (20).

10. An anti-vibration support as claimed in any one of the preceding claims, wherein the mouthpiece (21) is dimensioned so as to have a natural resonance frequency ranging between 20 and 80 Hz.

11. An anti-vibration support as claimed in any one of the preceding claims, wherein the single-block, pneumatic actuating unit (15) has an air passage (24) which links the solenoid (28) to the pneumatic chamber (20) and which is dimensioned so as to have a natural resonance frequency ranging between 20 and 80 Hz.

## Patentansprüche

1. Aktives, schwingungsdämpfendes Hydrolager mit pneumatischer Steuerung, das dazu vorgesehen ist, zwischen zwei starren Elementen angeordnet zu werden, und das aufweist:
- eine erste und eine zweite starre Halterung (1, 3), die dazu bestimmt sind, mit den beiden zu verbindenden starren Elementen fest verbunden zu werden,
- einen Elastomerkörper (5), der die beiden Halterungen miteinander verbindet und eine mit Flüssigkeit gefüllte Arbeitskammer (A) teilweise umgrenzt,
- eine biegsame Wand (9), die eine mit Flüssigkeit gefüllte Ausgleichskammer (B) teilweise umgrenzt, wobei diese durch einen engen Durchgang (C), der ebenfalls mit Flüssigkeit gefüllt ist, mit der Arbeitskammer (A) verbunden ist,
- eine starre Trennwand (8), die mit der zweiten Halterung (3) fest verbunden ist und die Arbeitskammer (A) teilweise umgrenzt, wobei diese starre Trennwand einen Ansatz (21) aufweist, der von einer beweglichen Membran (19) verschlossen ist, wobei diese Membran eine erste Seite aufweist, die mit der Arbeitskammer (A) kommuniziert, und eine zweite Seite aufweist, die von der Arbeitskammer (A) isoliert ist,
- eine Pneumatikkammer (20), die teilweise von der zweiten Seite der Membran (19) umgrenzt wird,
**dadurch gekennzeichnet,**
**dass** es mindestens ein Elektroventil (28) aufweist, um die pneumatische Kammer (20) mit der Atmosphäre und/oder mit einem Anschluss (27), der dazu bestimmt ist, mit einer Druckluftquelle verbunden zu werden, kommunizieren zu lassen, wobei dieses Elektroventil mit einem elektrischen Steckverbinder (32) verbunden ist, der seinerseits dazu bestimmt ist, mit einem elektronischen Steuersystem verbunden zu werden, und dass es ein einstückiges pneumatisches Steuersystem (15) aufweist, das beinhaltet:
- einen starren Auflageblock (16), der mit der zweiten Halterung (3) fest verbunden ist,
- das Elektroventil (28),
- den pneumatischen Anschluss (27), und
- den elektrischen Steckverbinder (32),
wobei der Auflageblock (16) einen ringförmigen Rand (18) aufweist, der die pneumatische Kammer (20) teilweise umgrenzt, und wobei dieser Auflageblock unter Einklemmen der beweglichen Membran (19) zwischen diesem ringförmigen Rand und der starren Trennwand (8) an diese starre Trennwand angelegt ist, wobei dieser ringförmige Rand um den Ansatz (21) der starren Trennwand herum angeordnet ist.

2. Schwingungsdämpfendes Lager nach Anspruch 1, bei dem der Elastomerkörper (5) sich glockenförmig zwischen einer mit der ersten Halterung (2) fest verbundenen Spitze (6) einerseits und einer ringförmigen Basis (7), die mit der zweiten Halterung (3) fest verbunden ist, andererseits erstreckt, wobei das pneumatische Steuersystem (15) in einem starren Gehäuse (11) untergebracht ist, das sich auf der anderen Seite der starren Trennwand (8) als der Elastomerkörper (5) befindet, wobei dieses Gehäuse mit der zweiten Halterung (3) und mit der genannten starren Trennwand fest verbunden ist, indem die Basis (7) des Elastomerkörpers (5) auf die starre Trennwand aufgesetzt wird, und wobei der Auflageblock (16) des pneumatischen Steuersystems zwischen dem Gehäuse (11) und der starren Trennwand (8) dergestalt fest angebracht wird, dass der ringförmige Rand (18) dieses Auflageblocks gegen die bewegliche Membran (19) und die starre Trennwand (8) gedrückt ist.

3. Schwingungsdämpfendes Lager nach Anspruch 2, bei dem die Ausgleichskammer (B) ebenfalls innerhalb des Gehäuses (11) angeordnet ist.

4. Membran (19) aus einem zentralen Teil besteht, der zu der biegsamen Wand (9) der Ausgleichskammer gehört, wobei diese Ausgleichskammer (B) ringförmig ausgeführt ist und um das pneumatische Steuersystem (15) herum angeordnet ist.

5. Schwingungsdämpfendes Lager nach Anspruch 4, bei dem die biegsame Wand (9) der Ausgleichskammer eine außen umlaufende, metallene Verstärkungsbewehrung (10) aufweist, die durch Bördeln auf der starren Trennwand (8) und auf der zweiten Halterung (3) befestigt ist, wobei diese zweite Halterung und die Basis (7) des Elastomerkörpers (5) auf die starre Trennwand gedrückt ist.

6. Schwingungsdämpfendes Lager nach Anspruch 5, bei dem das Gehäuse (11) aus Metall besteht und durch Bördeln auf der umlaufenden Verstärkungsbewehrung (10) der biegsamen Wand befestigt ist.

7. Schwingungsdämpfendes Lager nach einem der Ansprüche 4 bis 6, bei dem die biegsame Wand (9) der Ausgleichskammer um ihren zentralen Teil herum, der die bewegliche Membran (19) bildet, eine starre zentrale Halterung (34) aufweist, die in dieser biegsamen Wand versenkt ist und aufweist:
- eine ringförmige Anlageseite (35), die parallel zu der starren Trennwand (8) verläuft und zwischen dieser starren Trennwand und dem ringförmigen Rand (18) des Auflageblocks des pneumatischen Steuersystems festgeklemmt ist,
- und einen ringförmigen Rand (36), der sich senkrecht zu der starren Trennwand (8) um den ringförmigen Rand (18) des Auflageblocks erstreckt.

8. Schwingungsdämpfendes Lager nach einem der Ansprüche 2 bis 7, bei dem die zweite Halterung (3) einen hohlen Kranz bildet, der zu der starren Trennwand (8) hin offen ist, wobei sie mit dieser starren Trennwand zusammen den engen Durchgang bildet.

9. Schwingungsdämpfendes Lager nach einem der vorherigen Ansprüche, bei dem der Auflageblock (16) des pneumatischen Steuersystems ferner einen Pufferbehälter (26) enthält, der zwischen dem pneumatischen Anschluss (27) und der pneumatischen Kammer (20) angeordnet ist.

10. Schwingungsdämpfendes Lager nach einem der vorherigen Ansprüche, bei dem der Ansatz (21) so bemessen ist, dass er eine Eigenresonanzfrequenz aufweist, die zwischen 20 und 80 Hz liegt.

11. Schwingungsdämpfendes Lager nach einem der vorherigen Ansprüche, bei dem das einstückige pneumatische Steuersystem (15) einen Luftdurchlass (24) aufweist, der das Elektroventil (28) mit der pneumatischen Kammer (20) verbindet und dergestalt bemessen ist, dass er eine Eigenresonanzfrequenz aufweist, die zwischen 20 und 80 Hz liegt.
